# EUROPÄISCHE PATENTANMELDUNG

(11) **EP 1 405 881 A1**
(43) Veröffentlichungstag der Anmeldung: **07.04.2004**
(21) Anmeldenummer: 02022406.9
(22) Anmeldetag: 04.10.2002
(51) Int. Cl.: C09D 5/34

(54) **Ueberzugsmittel**

(71) Anmelder: Eftec Europe Holding AG, 6304 Zug (CH)
(72) Erfinder: Pfau, Hans c/o EFTEC GmbH, 32676 Lügde (DE)
(74) Vertreter: Hepp, Dieter

(57) **Zusammenfassung**

Die Erfindung betrifft ein radikalisch härtbares Überzugsmittel, insbesondere für Spachtelmassen für Karosseriebleche, wobei das Überzugsmittel mindestens eine Bindemittelzusammensetzung, welche wiederum mindestens eine α,β-ethylenisch ungesättigte Polyester-Komponente enthält, und gegebenenfalls Zusatzstoffe wie Füllstoff, Entschäumer, Netzmittel, Anti-Absetzmittel, Pigmente, Katalysator und/oder weitere lackübliche Additive enthält. Kennzeichnend für das Überzugsmittel ist mindestens ein Celluloseester als Haftungsvermittler und eine Auswahl der Bestandteile für das Überzugsmittel aus den Gruppen von Zusammensetzungen oder Stoffen, die im wesentlichen styrolfrei sind. Es wird im weiteren ein Herstellungsverfahren sowie die Anwendung einer Spachtelmasse mit dem erfindungsgemässen Überzugsmittel beschrieben.

## Beschreibung

Die Erfindung betrifft ein radikalisch härtbares styrolfreies Überzugsmittel, eine damit hergestellte Spachtelmasse für Karosseriebleche auf der Basis einer ungesättigten Polyester-Harz-Bindemittelzusammensetzung, ein System umfassend das Überzugsmittel und einen Initiator, die Verwendung des Überzugsmittels und ein Verfahren zur Herstellung mindestens eines Schichtüberzuges mittels der erfindungsgemässen Spachtelmasse.

Überzugsmittel und besonders Spachtelmassen, wie sie beispielsweise bei Reparaturen an Karosserieblechen eingesetzt werden, sollten eine derartige Zusammensetzung aufweisen, dass möglichst ohne aufwendige Massnahmen die gesetzlich geregelten Grenzwerte, z.B. maximale Arbeitsplatzkonzentration etc. für die Spachtelmasse bzw. die darin enthaltenden Komponenten unterschritten werden. Zudem muss die Spachtelmasse eine leichte und zügige Bearbeitbarkeit aufweisen. Die Spachtelmasse muss in ungehärtetem Zustand gut verarbeitbar und nach einer möglichst kurzen Zeit bearbeitbar (schleifbar) sein.

Bekannte Spachtelmassen weisen zwar gute Eigenschaften auch im Hinblick auf die Haftung auf unterschiedlich vorbehandelten Blechen auf, sie enthalten jedoch unter anderem reaktive Monomere wie Styrol oder grössere Mengen an Lösungsmittel. Da Styrol eine erhebliche Toxizität besitzt, wäre ein Verzicht auf eine Verwendung von Styrol wünschenswert. Dies gilt ebenso für grössere Mengen an Lösungsmittel, insbesondere solche, die unter dem Begriff "flüchtige organische Komponenten" (engl. volatile organic compounds, VOC) bekannt sind, da sie beim Trocknen bzw. Aushärten der Spachtelmasse entweichen und eine erhebliche Belastung am Arbeitsplatz darstellen.

Aus EP 0 632 115 sowie EP 0 779 349 sind Überzugsmittel-Zusammensetzungen bekannt, die styrolfrei aufgebaut sind und ungesättigte Polyester-Komponenten enthalten. Jedoch weisen diese Zusammensetzungen den Nachteil auf, dass sie nur schlecht auf vorbehandelten, insbesondere verzinkten oder galvanisierten Blechen, wie sie im Automobilbau eingesetzt werden, haften.

Die Aufgabe der vorliegenden Erfindung ist es, die Nachteile des Bekannten zu vermeiden, insbesondere ein styrolfreies Überzugsmittel und eine Spachtelmasse mit einem derartigen Überzugsmittel bereitzustellen, die dennoch eine gute Haftung auf den jeweiligen Untergründen aufweist.

Die Aufgabe wird gelöst durch ein radikalisch härtbares Überzugsmittel, einer Spachtelmasse enthaltend dieses Überzugsmittels bzw. einem System aus Überzugsmittel und Initiator sowie einem Herstellungsverfahren für das Überzugsmittel gemäss den kennzeichnenden Merkmalen der unabhängigen Ansprüche.

Das erfindungsgemässe, radikalisch härtbare Überzugsmittel, insbesondere für Spachtelmassen für Karosseriebleche, enthält mindestens eine Bindemittelzusammensetzung, welche mindestens eine α,β-ethylenisch ungesättigte Polyester-Komponente und gegebenenfalls Zusatzstoffe wie Füllstoff, Entschäumer, Netzmittel, Anti-Absetzmittel, Pigmente, Katalysator und/oder weitere lackübliche Additive enthält. Das Überzugsmittel wird gekennzeichnet durch mindestens einen Celluloseester als Haftungsvermittler und durch die Auswahl der Bestandteile für das Überzugsmittel aus den Gruppen von Zusammensetzungen oder Stoffen, die im wesentlichen styrolfrei sind.

Vorteilhafterweise sind die α,β-ethylenisch ungesättigte Polyester-Komponente und der Celluloseester so ausgewählt, dass eine solche (Misch-)Verträglichkeit vorliegt, dass also die beiden Komponenten bzw. deren Lösung mischbar, vorzugsweise homogen mischbar sind. Kriterien für die Verträglichkeit von Polymeren sind dem Fachmann bekannt (vgl. Löslichkeitsparameter-Modelle) und basieren auf thermodynamischen Gesetzmässigkeiten (Mischungsenthalpie vs Mischungsentropie in Abhängigkeit vom Molekulargewicht). Die Gesetzmässigkeiten berücksichtigen bzw. geben das Ausmass der Wechselwirkungen (wie z.B. elektrostatische Wechselwirkungen, Wasserstoff-Brücken, van-der-Waals-Wechselwirkungen) zwischen den Molekülen der verschiedenen Polymere bzw. innerhalb der Moleküle eines Polymers. Die Verträglichkeit zweier Polymere ist um so besser, je kleiner die Differenz der Löslichkeitsparameter der Polymere A und B ist, d.h. je kleiner der Huggins'sche Wechselwirkungsparameter χ_{AB} ist. Der Huggins'sche Wechselwirkungsparameter sollte vorteilhaft einen kritischen Wert, der je nach Molekulargewicht zwischen 0.02 und 0.002 liegt, nicht überschreiten. Hier wird von den Kriterien für die Verträglichkeit von Polymeren von den Ausführungen bei bei B. Vollmert, Grundriss der makromolekularen Chemie ausgegangen (Eigenverlag E. Vollmert Verlag, Karlsruhe 1982, IV, Kap. 4.5.6, Seiten 222-224). Für eine Reihe von Polymeren sind Lösungsparameter verfügbar, die beispielsweise in Polymer Handbook, Ed.: J. Brandrup, E.H. Immergut, Wiley & Sons (Interscience), New York, 1975; J. L. Gardon in Encycl. Pol. Sci. Techol. 3, 833 (1965) oder H. Burrell in Encycl. Pol. Sci. Techol. 12, 618 (1970) tabellarisch angeführt werden.

Der Celluloseester ermöglicht den Aufbau einer stärkeren Haftung des Überzugmittels und der damit hergestellten Spachtelmasse auf dem Substrat, d.h. dem behandelten Karosserieblech. Unter einem behandelten Karosserieblech ist ein im Automobilbau übliches Stahlblech zu verstehen, dessen Oberfläche gegenüber Korrosion passiviert worden ist. Bekannte Behandlungsmethoden zur Oberflächenpassivierung wie beispielsweise Feuerverzinkung, Galvanisierung etc. sind dem Fachmann bekannt. Der Celluloseester bewirkt diese verbesserte Haftung durch stabile Wechselwirkungen zwischen den Komponenten des Überzugmittels, bzw. der damit hergestellten Spachtelmasse und der Substratoberfläche, insbesondere bei Substraten mit zinkhaltigen Oberflächenbeschichtungen.

Bevorzugte Celluloseester für das erfindungsgemässe Überzugsmittel sind Celluloseacetatbutyrat, Celluloseacetatpropionat oder Gemische davon. Geeignetes Celluloseacetatbutyrat bzw. Celluloseacetatpropionat weist ca. 0,6 bis 2,3 Butyryl- bzw. Propionyl- und ca. 0,5 - 2,1 Acetylgruppen pro Anhydroglucose-Einheit auf. Bevorzugt ist ein Celluloseacetatbutyrat bzw. -propionat, welches neben den Acetyl- und den Butyryl bzw. Propionyl-Gruppen 0,9 bis 1,3 Hydroxylgruppen pro Anhydroglucose-Einheit aufweist. Weiter bevorzugt werden Celluloseacetatbutyrat mit einem Molekulargewicht zwischen 20000 und 40000 bzw. Celluloseacetatpropionat mit einem Molekulargewicht zwischen 15000 und 25000. Das Molekulargewicht beeinflusst die Viskosität dieser Ester, so dass dies bei der Auswahl des Celluloseacetatbutyrats bzw. -propionats im Hinblick auf die Viskosität des Überzugmittels zu berücksichtigen ist. Die Haftung des Überzugsmittels auf dem Blech ist von der Viskosität des Celluloseacetatbutyrats bzw. -propionats weitgehend unabhängig. Der Mengenanteil des Celluloseesters beträgt in Abhängigkeit vom Molekulargewicht zwischen 0,4 und 2,5 Gew.-%, bevorzugt zwischen 0,5 und 1,8 Gew.-% bezogen auf das Gesamtgewicht des Überzugsmittels.

Der Begriff "im wesentlichen styrolfrei" ist so zu verstehen, dass die Bindemittelzusammensetzung Styrol entweder nicht oder höchstens in Spuren enthält. Unter Spuren sind derartige Mengen zu verstehen, die sich als eine Verunreinigung der Komponenten der Bindemittelzusammensetzung darstellen und nicht gezielt den Komponenten zugesetzt sind. Das erfindungsgemässe Überzugsmittel als solches enthält neben der Bindemittelzusammensetzung auch kein Styrol als weitere Komponente, d.h. das Überzugsmittel ist insgesamt im wesentlich styrolfrei.

Optional enthält das Überzugsmittel Zusatzstoffe wie Füllstoff, Entschäumer, Netzmittel, Anti-Absetzmittel, Pigmente, Katalysator und/oder weitere lackübliche Additive zur Anpassung des Überzugsmittels an die spezifischen Anforderungen. Derartige Zusatzstoffe sind dem Fachmann geläufig. Der Mengenanteil dieser Stoffe, mit Ausnahme des Füllstoffs, kann jeweils zwischen 0,01 und 5 Gew.-% bezogen auf das Gesamtgewicht des Überzugsmittels betragen.

Das Überzugsmittel enthält in einer bevorzugten Form einen Verdünner, insbesondere einen nicht-reaktiven Verdünner, der in erster Linie zur Einstellung der Viskosität dient. Gleichzeitig kann der Verdünner auch die Funktion eines Lösungsmittels übernehmen. Der Begriff "nicht-reaktiv" ist so zu verstehen, dass keine chemische Reaktion mit der Polyester-Komponente stattfindet. van-der-Waals-Wechselwirkungen, Wasserstoffbrücken-Bindungen oder ähnliche Wechselwirkungen sind nicht unter "nicht-reaktiv" zu verstehen. Bevorzugt beträgt der Gehalt an nicht-reaktivem Verdünner im Überzugsmittel bezogen auf das Gesamtgewicht maximal 3 Gew.-%. Ein geeigneter Verdünner ist Ethylacetat. Es können auch andere Verdünner wie Butylacetat oder Xylol verwendet werden.

Die α,β-ethylenisch ungesättigte Polyester-Komponente der Bindemittelzusammensetzung besteht mindestens aus einem Polyester-Harz erhältlich aus einer Umsetzung von
a) einer Dicarbonsäurekomponente, bestehend zu 75 bis 100 Carboxyl-Äquivalent-% aus α,β-ethylenisch ungesättigten Dicarbonsäuren mit 4 oder 5 Kohlenstoffatomen und/oder deren Anhydriden und zu 0 bis 25 Carboxyl-Äquivalent-% aus Dicarbonsäuren, ausgewählt aus der Gruppe der gesättigten Dicarbonsäuren mit 4 bis 10 Kohlenstoffatomen sowie α,β-ethylenisch ungesättigten Dicarbonsäuren mit 6 bis 10 Kohlenstoffatomen oder deren Anhydriden, mit
b) einer Alkoholkomponente, bestehend zu 15 bis 60 Hydroxyl-Äquivalent-% aus mindestens einem β,γ-ethylenisch ungesättigtem Alkenylether-Alkohol mit 6 bis 14 Kohlenstoffatomen und zu 40 bis 85 Hydroxyl-Äquivalent-% aus einer Alkoholkomponente ausgewählt aus der Gruppe bestehend aus ein- und/oder zweiwertigen Alkoholen des Molekulargewichtsbereichs 32 bis 400, wobei β,γ-ethylenisch ungesättigte Alkenylether-Alkohol mit 6 bis 14 Kohlenstoffatomen aus dieser Gruppe ausgeschlossen sind.
Die Mengenverhältnisse der Komponenten a) und b) sind so auszuwählen, dass das Äquivalentverhältnis von Carboxylgruppen zu Hydroxylgruppen von höchstens 1:1, vorzugsweise von 0.6 : 1 bis 1:1 beträgt. Das erhaltene Polyester-Harz weist eine Viskosität bei 23°C von 1000 bis 15000 mPa.s auf.

Beispiele für α,β-ethylenisch ungesättigten Dicarbonsäuren der Säurekomponente a) sind Fumarsäure, Itaconsäure, Itaconsäureanhydrid, Maleinsäure, Maleinsäureanhydrid oder beliebige Gemische dieser Säuren oder Anhydride. Bevorzugt sind Fumarsäure, Maleinsäure und/oder Maleinsäureanhydrid, wobei Fumarsäure besonders bevorzugt ist. Vorzugsweise besteht die Säurekomponente a) zu 90 bis 100 Carboxyl-Aquivalent-% aus α,β-ethylenisch ungesättigten Dicarbonsäuren.

Die Säurekomponente a) kann neben den beispielhaft genannten α,β-olefinisch ungesättigten Dicarbonsäure bzw. deren Anhydride bis zu 25, vorzugsweise bis zu 10 Carboxyl-Äquivalent-% an Dicarbonsäuren, ausgewählt aus der Gruppe der gesättigten Dicarbonsäuren mit 4 bis 10 Kohlenstoffatomen sowie α,β-ethylenisch ungesättigten Dicarbonsäuren mit 6 bis 10 Kohlenstoffatomen oder deren Anhydride enthalten. Zu derartigen Dicarbonsäuren, die der Definition von reaktiven, α,β-ethylenisch ungesättigten Dicarbonsäuren mit 4 oder 5 Kohlenstoffatomen und/oder deren Anhydriden nicht entsprechen, gehören insbesondere gesättigte, aliphatische Dicarbonsäuren mit 4 bis 10 Kohlenstoffatomen wie beispielsweise Bernsteinsäure, Adipinsäure, Sebacinsäure und/oder die Anhydride derartiger Säuren, cycloaliphatische Dicarbonsäuren oder Dicarbonsäureanhydride mit 8 bis 10 Kohlenstoffatomen wie beispielsweise Norbornendicarbonsäure oder deren Anhydride und aromatische Dicarbonsäuren oder Dicarbonsäureanhydride mit 8 Kohlenstoffatomen wie beispielsweise Phthalsäure, Phthalsäureanhydrid, Isophthalsäure oder Terephthalsäure.

Die den Polyestern zugrundeliegende Alkoholkomponente b) besteht zu 15 bis 60 Hydroxyl-Äquivalent-% aus mindestens einem β,γ-ethylenisch ungesättigten Alkenyletheralkohol mit 6 bis 14 Kohlenstoffatomen und vorzugsweise einer Hydroxylgruppe pro Molekül. Hierzu gehören insbesondere die dieser Definition entsprechenden Allylether mehrwertiger Alkohole wie z.B. Trimethylolpropandiallylether, Glycerindiallylether oder Pentaeryththrittriallylether, vorzugsweise Trimethylolpropandiallylether.

Die Alkoholkomponente b) besteht im Übrigen, d.h. zu 40 bis 85 Hydroxyl-Äquivalent-% an Alkoholkomponente ausgewählt aus der Gruppe bestehend aus ein- und/oder zweiwertigen Alkoholen des Molekulargewichtsbereichs 32 bis 400, wobei β,γ-ethylenisch ungesättigte Alkenylether-Alkohol mit 6 bis 14 Kohlenstoffatomen aus dieser Gruppe ausgeschlossen sind. Beispiele dieser Definition der β,γ-ethylenisch ungesättigten Alkenylether-Alkohole mit 6 bis 14 Kohlenstoffatomen nicht entsprechenden ein- oder mehrwertigen, vorzugsweise ein- oder zweiwertigen Alkohole des Molekulargewichtsbereichs 32 bis 400 sind Methanol, Ethanol, n-Hexanol, Isooctanol, Isododecanol, Benzylalkohol, Ethylenglykol, Diethylenglykol, Propylenglykol oder aus diesen einfachen Alkoholen durch Alkoxylierung erhaltene, den gemachten Angaben bezüglich der Anzahl der Kohlenstoffatome entsprechende, Ethergruppen aufweisende Alkohole. Die in Betracht kommenden zweiwertigen Alkohole weisen vorzugsweise 2 bis 6 Kohlenstoffatome, die in Betracht kommenden einwertigen Alkohole vorzugsweise 1 bis 2 Kohlenstoffatome auf.

Die Herstellung der ungesättigten Polyester kann nach bekannten Methoden, z.B. durch Schmelzveresterung der Alkohole und Säuren oder deren veresterungsfähigen Derivate erfolgen, vgl. "Methoden der organischen Chemie" (Houben-Weyl), 4. Auflage, Bd. 14/2, Georg Thieme Verlag, Stuttgart 1961, S.1 - 5, 21 - 33, 40 - 44. Vorzugsweise erfolgt die Veresterung unter Inertgasatmosphäre bei Temperaturen von 140 bis 190°C.

Eine wie vorstehend ausgeführte Polyester-Komponente wird in EP-B1 0623660 beschrieben. Die Offenbarung der EP-B1 0623660 wird in vollem Umfang im Hinblick auf die Polyester-Komponente sowie auf optional weitere Bestandteile der dort beschriebenen Komposition mit in die vorliegende Anmeldung aufgenommen. Eine im Rahmen der Erfindung bevorzugte und geeignete Polyester-Komponente ist Roskydal VP LS 2190 der Fa. Bayer.

In einer Ausführungsform des Überzugsmittels beträgt die Menge der Bindemittelzusammensetzung 20 bis 50 Gew.-%, bevorzugt 25 bis 35 Gew.-% bezogen auf das Gesamtgewicht des Überzugsmittels. Diese Mengenverhältnisse der Bindemittelzusammensetzung gewährleisten eine ausreichende Festigkeit der mit dem Überzugsmittel hergestellten Spachtelmasse beim Auftragen und der späteren Bearbeitung der gehärteten Spachtelmasse. Zudem reicht die Menge aus, um die im Überzugsmittel enthaltenen Zusatzstoffe, insbesondere die Füllstoffe ausreichend zu benetzen und eine gleichmässige Masse zu erzielen.

Ebenfalls bevorzugt enthält das Überzugsmittel Füllstoffe bzw. Mischungen von Füllstoffen wie sie für Überzugsmittel Verwendung finden. Entsprechende Beispiele sind dem Fachmann bekannt. Im Rahmen der Erfindung sind Talkum sowie Schwerspat oder deren Mischung bevorzugt. Die Füllstoffe können dabei unterschiedliche Körnungsgrade aufweisen. Eine entsprechende Mischung von Füllstoffen mit verschiedenen Körnungen erlaubt eine Einstellung der Eigenschaften des Überzugsmittels hinsichtlich der Verarbeitbarkeit und besonders im Hinblick auf die Schleifbarkeit der ausgehärteten Spachtelmasse sowie deren Oberflächenbeschaffenheit. Diese ist für eine nachfolgende Lackierung von erheblicher Bedeutung. Dem Fachmann sind derartige Füllstoffe bekannt.

Vorteilhafterweise beträgt der Anteil des Füllstoffes im Überzugsmittel 25 bis 75 Gew.-% bezogen auf das Gesamtgewicht des Überzugsmittels. Bevorzugt wird ein Mengenanteil an Füllstoff zwischen 50 bis 70 Gew.-% eingesetzt. Mit den beschriebenen Mengenbereichen der Füllstoffe wird neben der Schleifbarkeit auch die Festigkeit der Spachtelmasse im Zusammenwirken mit der Bindemittelzusammensetzung sichergestellt.

Ein weiterer Aspekt der Erfindung ist eine Spachtelmasse, die ein erfindungsgemässes Überzugsmittel sowie einen Radikalinitiator enthält. Die Menge des Radikalinitiators beträgt zwischen 1 und 3 Gew.-% bezogen auf das Gesamtgewicht der Spachtelmasse.

Dem Fachmann sind verschiedene geeignete Radikalinitiatoren bekannt. Bevorzugt können Peroxide wie Methylethylketonperoxid, Cyclohexanonperoxid oder DiBenzoylperoxid eingesetzt werden. Durch den Einsatz unterschiedlicher Radikalinitiatoren, d.h. Härter lässt sich Einfluss auf die Vernetzungsgeschwindigkeit der Spachtelmasse und somit auf die Topfzeit bzw. Aushärtezeit nehmen. Die Wahl eines spezifischen Härters kann gegebenenfalls eine geänderte Zusammensetzung des Überzugsmittels, beispielsweise eine teilweise Substitution des Beschleunigers, erfordern. Derartige Erfordernisse bzw. Effekte sind dem Fachmann jedoch bekannt.

Das erfindungsgemässe Überzugsmittel bildet in einem weiteren Aspekt der Erfindung einen Teil eines Systems für eine Spachtelmasse. Das System umfasst neben dem Überzugsmittel einen Härter, d.h. einen Radikalinitiator, der die Härtung der gemischten Spachtelmasse einleitet. Das Überzugsmittel ist dabei bevorzugt in verschliessbaren Gebinden wie beispielsweise Eimer oder Kanister abgefüllt, der Härter hingegen vorzugsweise in Tuben oder Kartuschen, die eine dosierbare Abgabe erlauben.

Der Anwender kann die erforderliche Menge an erfindungsgemässem Überzugsmittel aus diesen Gebinden entnehmen, mit der notwendigen Menge an Härter mischen und die Mischung auf die zu bearbeitende Stelle am Karosserieblech aufbringen. Eine homogene Vermischung der beiden Komponenten vermeidet das Auftreten von Fehlern in der gespachtelten Fläche und unnötige Nacharbeit. Die Spachtelmasse lässt sich auch in mehreren Schichten auf die zu bearbeitende Stelle des Karosseriebleches aufbringen. Dem Fachmann ist bekannt, dass eine Bearbeitung der jeweils vorhergehend aufgebrachten Schicht erforderlich sein kann.

Das Herstellungsverfahren des erfindungsgemässen Überzugsmittels enthält die Schritte des Bereitstellens einer Bindemittelzusammensetzung, wie sie im Detail bereits zuvor beschrieben ist, dem Bereitstellen mindestens eines Celluloseesters, welcher mit einer α,β-ethylenisch ungesättigten Polyester-Komponente verträgt ist, und dem Dispergieren der bereitgestellten Bestandteile. Gegebenenfalls erforderliche Zusatzstoffe werden zum überwiegenden Teil zusammen mit dem Celluloseester oder nachfolgend zur Bindemittelzusammensetzung hinzugefügt. Das Überzugsmittel ist insgesamt im wesentlichen styrolfrei. Vorteilhafterweise wird der Celluloseester in einem Lösungsmittel gelöst.

Ein weiterer Aspekt der Erfindung betrifft die Verwendung von Celluloseester in weitgehend styrolfreien Spachtelmassen als Haftungsvermittler gegenüber Substraten mit zinkhaltigen Oberflächenbeschichtungen. Der Celluloseester wechselwirkt vorteilhaft mit der zinkhaltigen Oberfläche, insbesondere mit dem darauf enthaltenen Zinkoxid und ist zugleich mit den Komponenten der Bindemittelzusammensetzung verträglich. Der Celluloseester kann so kleinere Moleküle, die im Überzugsmittel enthalten sind, von der Grenzfläche verdrängen und die Haftung der Spachtelmasse auf dem behandelten Karosserieblech erhöhen.

Die Erfindung wird im folgenden anhand von Beispielen näher beschrieben, ohne dass dies eine Beschränkung der Erfindung auf diese Beispiele darstellt.

Für die Herstellung der Bindemittelzusammensetzung für die Spachtelmasse wird Roskydal VP LS 2190 (styrolfreies Polyester-Harz, Bayer AG) in einem Dissolver vorgelegt. Eine 50%ige Ethylacetat-Lösung von Acronal® 4F (BASF AG), Octa Soligen Calcium 4 (Netzmittel, Borchers GmbH), Titandioxid (verschiedene Lieferanten), 50%ige Ethylacetat-Lösung von Celluloseacetatbutyrat CAB 381-0,5 (Eastman Chemical) sowie Luvotix R-RF (Anti-Absetzmittel, Lehmann & Voss, Hamburg) werden nacheinander zugesetzt und unter Rühren innig miteinander vermischt. Die Füllstoffe Talkum-Mix (Fa. Omya, Köln) und Schwerspat (Fa. Ziegler & Co) werden ebenfalls unter Rühren zugesetzt. Nach vollständiger Benetzung der Füllstoffe wird als Hautverhütungsmittel Butanonoxim zugemischt. Die Mischung wird unter Rühren und unter Vakuum dispergiert, bis eine Temperatur von ca. 40°C erreicht ist. Anschliessend wird Kobaltoctoat (Okta Soligen Kobalt 6, Borchers GmbH) als Katalysator zugemischt. Die Mischung wird gerührt, bis eine Temperatur von ca. 50°C erreicht ist. Die hergestellte Mischung wird mit einer Temperatur von mehr als 40 °C in Gebinde abgefüllt.

Tabelle 1 gibt Zusammensetzungen für die erfindungsgemässe Spachtelmasse sowie für ein Vergleichsbeispiel wieder.
Die Bindemittel-Zusammensetzung wird mit dem Radikalinitiator gemischt und innerhalb von maximal 10 min. verarbeitet.

**Tabelle 1:**

| Spachtelmasse-Zusammensetzungen | | | | | |
|---|---|---|---|---|---|
| Beispiel | 1 | 2 | 3 | 4 | 5* |
| Polyester-Harz | 30,0 | 30,0 | 30,0 | 30,0 | 30,0 |
| Acrylsäureester | 0,5 | 0,5 | 0,5 | 0,5 | 0,5 |
| CAB 381-0,5 ** | 0,5 | 0,7 | 1,0 | 1,5 | - |
| Okta Soligen Ca4 | 0,5 | 0,5 | 0,5 | 0,5 | 0,5 |
| Luvotix R-RF | 0,4 | 0,4 | 0,4 | 0,4 | - |
| Talkum-Mix | 46,0 | 46,0 | 46,0 | 46,0 | 46,0 |
| Schwerspat | 20,0 | 20,0 | 20,0 | 20,0 | 20,0 |
| Octa Soligen Kobalt 6 | 0,5 | 0,5 | 0,5 | 0,5 | 0,5 |
| Ethylacetat | 0,5 | 0,5 | 0,5 | 0,5 | 0,5 |
| Initiator (MEKP) | 2 | 2 | 2 | 2 | 2 |

| | | | | | |
|---|---|---|---|---|---|
| * : Vergleichsbeispiel; ** : Celluloseester, ungelöst. Mengenangabe jeweils in Gew.% | | | | | |

Die Spachtelmassen gemäss den Beispielen 1-5 wurden auf 20 x 30 cm grosse Blechstücke aus Stahl, feuerverzinkten und galvanisierten Stahlblechen verschiedener Hersteller mit einer Spachtel aufgebracht und bei Raumtemperatur für 150 min gehärtet. Für die Prüfung der Haftungsfähigkeit wurde der dem Fachmann bekannte 90° -Biegetest angewendet.

Die erzielten Haftungseigenschaften der erfindungsgemässen Spachtelmassen sowie des Vergleichsbeispiels gibt Tabelle 2 wieder.

**Tabelle 2:**

| Haftungseigenschaften der Beispiele | | | | |
|---|---|---|---|---|
| Beispiel | Haftung auf Blechen | | | Bemerkungen |
| | Stahl | feuerverzinkt | galvanisiert | |
| 1 | o | o | o | 50% Adhesionsbruch |
| 2 | + | + | + | Kohäsionsbruch |
| 3 | + | + | + | Kohäsionsbruch |
| 4 | + | + | + | Kohäsionsbruch, aber erhöhte Viskosität |
| 5 | o | o | - | Schlechte Haftung |
| - : keine Haftung; o: Haftung; +: gute Haftung. | | | | |

Tabelle 3 zeigt weitere Zusammensetzungen für das erfindungsgemässe Überzugsmittel mit verschiedenen Anteilen an Komponenten und Celluloseacetatpropionat als Celluloseester.

**Tabelle 3:**

| Weitere Überzugsmittel-Zusammensetzungen | | | | | | |
|---|---|---|---|---|---|---|
| Beispiel | 6 | 7 | 8 | 9 | 10 | 11 |
| Polyester-Harz | 30,0 | 25,0 | 29,2 | 30 | 45 | 30,0 |
| Acrylsäureester | 0,9 | 0,6 | 0,8 | 1,1 | 1,1 | 0,5 |
| CAB ** | 0,8 | 0,7 | 0,9 | 1,6 | 1,6 | |
| CAP ** | | | | | | 0,9 |
| Okta Soligen Ca4 | 0,5 | 0,5 | 0,4 | 0,7 | 0,7 | 0,5 |
| Luvotix R-RF | 0,4 | 0,4 | 0,3 | 0,2 | 0,2 | 0,4 |
| Titandioxid | 1,9 | 1,5 | 2,1 | 3 | 3 | 2,0 |
| Talkum-Mix | 46,0 | 39,0 | 46,7 | 26,0 | 26,0 | 45,0 |
| Schwerspat | 19,4 | 30,4 | 15,9 | 14,7 | 14,7 | 20,0 |
| Octa Soligen Kobalt 6 | 0,5 | 0,5 | 0,4 | 0,6 | 0,6 | 0,6 |
| Ethylacetat**** | 1-3 | 1-3 | 1-2,5 | 1-3 | 1-3 | 0,5 |
| Expancel 461 DE 20*** | | | | 0,3 | 1 | |

| | | | | | | |
|---|---|---|---|---|---|---|
| * : Vergleichsbeispiel; ** : Celluloseester, ungelöst; | | | | | | |
| *** : (Fa. Expancel, Sundsvall, Schweden); | | | | | | |
| **** : variierende Mengen je nach einzustellender Viskosität. Mengenangabe jeweils in Gew.-% | | | | | | |

Zusätzlich zum Talkum-Mix können auch Leichtfüllstoffe wie das genannte Expancel 461DE20 oder Glas- bzw. Keramikhohlkugeln anderer Hersteller, für Spachtelmassen, insbesondere für Leichtspachtelmassen verwendet werden.

## Patentansprüche

**1.** Radikalisch härtbares Überzugsmittel, insbesondere für Spachtelmassen für Karosseriebleche enthaltend mindestens eine Bindemittelzusammensetzung, welche mindestens eine α,β-ethylenisch ungesättigte Polyester-Komponente enthält, und gegebenenfalls Zusatzstoffe wie Füllstoffe, Entschäumer, Netzmittel, Anti-Absetzmittel, Pigmente, Katalysator und/oder weitere Additive, **dadurch gekennzeichnet, dass** das Überzugsmittel mindestens einen Celluloseester enthält und dass die Bestandteile für das Überzugsmittel ausgewählt sind aus den Gruppen von Zusammensetzungen oder Stoffen, die im wesentlichen styrolfrei sind.

**2.** Überzugsmittel nach Anspruch 1, enthaltend mindestens eine Bindemittelzusammensetzung, welche mindestens eine α,β-ethylenisch ungesättigte Polyester-Komponente enthält, **dadurch gekennzeichnet, dass** das Überzugsmittel mindestens einen Celluloseester als Haftungsvermittler enthält, und dass die α,β-ethylenisch, ungesättigte Polyester-Komponente und der Celluloseester so ausgewählt sind, dass sie miteinander mischungsverträglich sind.

**3.** Überzugsmittel nach Anspruch 1 oder 2, **dadurch gekennzeichnet, dass** das Überzugsmittel einen nicht-reaktiven Verdünner in einer Menge geringer als 3 Gew% bezogen auf die Gesamtgewicht des Überzugsmittels enthält.

**4.** Überzugsmittel nach einem der Ansprüche 1 bis 3, **dadurch gekennzeichnet, dass** der Celluloseester Celluloseacetatbutyrat, Celluloseacetatpropionat oder ein Gemisch dieser Ester ist.

**5.** Überzugsmittel nach einem der Ansprüche 3 oder 4, **dadurch gekennzeichnet, dass** der nicht-reaktive Verdünner Ethylacetat ist.

**6.** Überzugsmittel nach einem vorangehenden Ansprüche, **dadurch gekennzeichnet, dass** die α,β-ethylenisch ungesättigte Polyester-Komponente mindestens aus einem Polyester-Harz aus einer Umsetzung von
a) einer Dicarbonsäurekomponente, bestehend zu 75 bis 100 Carboxyl-Äquivalent-% aus α,β-ethylenisch ungesättigten Dicarbonsäuren mit 4 oder 5 Kohlenstoffatomen und/oder deren Anhydriden und zu 0 bis 25 Carboxyl-Äquivalent-% aus Dicarbonsäuren, ausgewählt aus der Gruppe der gesättigten Dicarbonsäuren mit 4 bis 10 Kohlenstoffatomen sowie α,β-ethylenisch ungesättigten Dicarbonsäuren mit 6 bis 10 Kohlenstoffatomen oder deren Anhydriden, mit
b) einer Alkoholkomponente, bestehend zu 15 bis 60 Hydroxyl-Äquivalent-% aus mindestens einem β,γ-ethylenisch ungesättigtem Alkenylether-Alkohol mit 6 bis 14 Kohlenstoffatomen und zu 40 bis 85 Hydroxyl-Äquivalent-% aus einer Alkoholkomponente ausgewählt aus der Gruppe bestehend aus ein- und/oder zweiwertigen Alkoholen des Molekulargewichtsbereichs 32 bis 400, wobei β,γ-ethylenisch ungesättigte Alkenylether-Alkohol mit 6 bis 14 Kohlenstoffatomen aus dieser Gruppe ausgeschlossen sind, besteht;
wobei ein Äquivalentverhältnis von Carboxylgruppen zu Hydroxylgruppen von höchstens 1:1 besteht, und wobei das Polyester-Harz eine Viskosität bei 23°C von 1000 bis 15000 mPa.s aufweist.

**7.** Überzugsmittel nach einem der vorangehenden Ansprüche, **dadurch gekennzeichnet, dass** die Masse der Bindemittelzusammensetzung 20 bis 50 Gew.-% bezogen auf das Gesamtgewicht des Überzugsmittels beträgt.

**8.** Überzugsmittel nach einem vorangehenden Ansprüche, **dadurch gekennzeichnet, dass** das Überzugsmittel als Füllstoff Talkum und/oder Schwerspat enthält.

**9.** Überzugsmittel nach einem der vorangehenden Ansprüche, **dadurch gekennzeichnet, dass** das Überzugsmittel 25 bis 75 Gew.-% bezogen auf das Gesamtgewicht des Überzugsmittels an Füllstoff enthält.

**10.** Spachtelmasse enthaltend ein Überzugsmittel nach einem der vorangehenden Ansprüche und einem Radikalinitiator, wobei die Menge des Radikalinitiators zwischen 1 und 3 Gew.-% bezogen auf das Gesamtgewicht des Überzugsmittels beträgt.

**11.** Spachtelmassen-System umfassend,
a) als erste Komponente ein Überzugsmittel nach einem der Ansprüche 1 bis 9; und
b) als zweite Komponente zum Beimischen zur ersten Komponente einen Radikalinitiator zur Aushärtung des Überzugsmittels.

**12.** Verwendung eines Überzugmittels nach einem der Ansprüche 1 bis 9 als Spachtelmasse für Karosseriebleche.

**13.** Verfahren zur Erzeugung eines Schichtüberzuges durch Aufbringen mindestens einer härtbaren Schicht einer Spachtelmasse auf ein Substrat, **dadurch gekennzeichnet, dass** die Spachtelmasse durch Mischen eines Überzugsmittels gemäss einem der Ansprüche 1 bis 9 mit einem Radikalinitiator bereitgestellt wird.

**14.** Verfahren zur Herstellung eines radikalisch härtbaren Überzugsmittels enthaltend die Schritte:
a) Bereitstellen einer Bindemittelzusammensetzung enthaltend eine α,β-ethylenisch ungesättigte Polyester-Komponente;
b) Bereitstellen mindestens eines Celluloseesters, welcher mit der Polyester-Komponente verträglich ist;
c) Dispergieren der in den Schritten a) und b) bereitgestellten Bestandteile;
wobei die Bestandteile für das Überzugsmittel ausgewählt sind aus den Gruppen von Zusammensetzungen oder Stoffen, die im wesentlichen styrolfrei sind.

**16.** Verwendung von Celluloseester in styrolfreien Spachtelmassen enthaltend eine Bindemittelzusammensetzung, welche eine α,β-ethylenisch ungesättigte Polyester-Komponente enthält, als Haftungsvermittler gegenüber Substraten mit zinkhaltigen Oberflächenbeschichtungen.

**17.** Verfahren zur Herstellung eines radikalisch härtbaren Überzugsmittels gemäss einem der Ansprüche 1 bis 9, enthaltend die Schritte:
a) Bereitstellen einer Bindemittelzusammensetzung enthaltend eine α,β-ethylenisch ungesättigte Polyester-Komponente, wobei die Polyester-Komponente aus mindestens einem Polyester-Harz aus einer Umsetzung von
i) einer Dicarbonsäurekomponente, bestehend zu 75 bis 100 Carboxyl-Äquivalent-% aus α,β-ethylenisch ungesättigten Dicarbonsäuren mit 4 oder 5 Kohlenstoffatomen und/oder deren Anhydriden und zu 0 bis 25 Carboxyl-Äquivalent-% aus Dicarbonsäuren, ausgewählt aus der Gruppe der gesättigten Dicarbonsäuren mit 4 bis 10 Kohlenstoffatomen sowie α,β-ethylenisch ungesättigten Dicarbonsäuren mit 6 bis 10 Kohlenstoffatomen oder deren Anhydriden, mit
ii) einer Alkoholkomponente, bestehend zu 15 bis 60 Hydroxyl-Äquivalent-% aus mindestens einem β,γ-ethylenisch ungesättigtem Alkenylether-Alkohol mit 6 bis 14 Kohlenstoffatomen und zu 40 bis 85 Hydroxyl-Äquivalent-% aus einer Alkoholkomponente ausgewählt aus der Gruppe bestehend aus einund/oder zweiwertigen Alkoholen des Molekulargewichtsbereichs 32 bis 400, wobei β,γ-ethylenisch ungesättigte Alkenylether-Alkohol mit 6 bis 14 Kohlenstoffatomen aus dieser Gruppe ausgeschlossen sind, besteht;
wobei das Äquivalentverhältnis von Carboxylgruppen zu Hydroxylgruppen von höchstens 1:1 beträgt;
b) Bereitstellen mindestens eines Celluloseacetatesters;
c) Mischen der unter den Schritten a) und b) bereitgestellten Komponenten sowie gegebenenfalls Zugabe von Zusatzstoffen; und
d) Zugabe mindestens eines Füllstoffs.
